# EUROPÄISCHE PATENTSCHRIFT

(11) **EP 3 602 393 B1**
(45) Veröffentlichungstag und Bekanntmachung des Hinweises auf die Patenterteilung: **11.05.2022**
(21) Anmeldenummer: 18717257.2
(22) Anmeldetag: 28.03.2018
(51) Int. Cl.: G06K 9/00, B60K 37/02, G06F 3/01

(54) **SYSTEM UND VERFAHREN ZUR ERKENNUNG VON AUGEN UND HÄNDEN**
SYSTEM AND METHOD FOR DETECTING EYES AND HANDS
SYSTÈME ET PROCÉDÉ DE DÉTECTION DES YEUX ET DES MAINS

(30) Priorität: 30.03.2017 DE 102017205458
(43) Veröffentlichungstag der Anmeldung: 05.02.2020
(73) Patentinhaber: Robert Bosch GmbH, 70442 Stuttgart (DE)
(72) Erfinder: EL BANNA, Bilal, 70437 Stuttgart (DE); HIEBER, Patrick, 73434 Aalen (DE); ALTMUELLER, Tobias, 70567 Stuttgart (DE)
(86) Internationale Anmeldenummer: PCT/EP2018/057873
(87) Internationale Veröffentlichungsnummer: WO 2018/178132

(56) Entgegenhaltungen:
- EP-A1- 3 018 629
- DE-A1-102014 220 591
- US-A1- 2012 257 035
- US-A1- 2015 062 168

## Beschreibung

### Stand der Technik

Aus dem Stand der Technik sind Systeme zum Erfassen und Detektieren von Augen und anderen Körperteilen, insbesondere Händen, eines Benutzers bekannt, beispielsweise aus A. Päsäricä et al., "Eye blinking detection to perform selection for an eye tracking system used in assistive technology", Design and Technology in Electronic Packaging (SIITME) 2016 IEEE 22nd International Symposium for, pp. 213-216, 2016 oder aus F. Weichert et al., "Analysis of the accuracy and robustness of the leap motion controller". Sensors 2013, 13, 6380-6393. Dabei kann das Erfassen der Augen oder Hände auch ein Erfassen einer Bewegung der Augen beziehungsweise Hände für eine Gestenerkennung umfassen.

Die Erfassung und Detektion der Augen und Hände erfolgt über Sensoren, insbesondere Kameras, welche mit Rechnern, auch Recheneinheiten oder Prozessoren genannt, für eine Verarbeitung der Daten aus den Sensoren verbunden sind. Dabei wird überlicherweise ein erster Rechner mit einem ersten Sensor für die Augendetektion und ein zweiter Rechner mit einem zweiten Sensor für die Handdetektion verwendet, da die Erfassung und Detektion von Augen und Händen unterschiedliche technische Voraussetzungen aufweist, insbesondere aufgrund der zeitlich stark unterschiedlichen Bewegungen der zu erfassenden Augen und Hände.

Die Druckschrift EP 3 018 629 A1 (PIONEER CORP [JP]) 11. Mai 2016 (2016-05-11), offenbart ein Bildaufnahmesystem für ein Kraftfahrzeug mit einer Bildaufnahmevorrichtung, die dafür eingerichtet ist, selektiv einen ersten Bildaufnahmebereich zur Erkennung der Augen eines Benutzers und einen zweiten Bildaufnahmebereich zur Erkennung des Körpers und insbesondere der Hände eines Benutzers aufzunehmen.

### Offenbarung der Erfindung

### Vorteile der Erfindung

Vor diesem Hintergrund betrifft die Erfindung ein System, insbesondere für ein Kraftfahrzeug, und ein zugehöriges Verfahren zur Erkennung von Augen und Händen in einer Sequenz von Bildern, welche mit einer Kamera des Systems aufgenommen wird. Das System umfasst einen Rechner, welcher eingerichtet ist, alternierend eine erste Teilsequenz umfassend eine vorgebbare erste Anzahl von aufeinander folgenden Bildern der Sequenz einem ersten Algorithmus zur Augenerkennung und eine zweite Teilsequenz umfassend eine vorgebbare zweite Anzahl von aufeinander folgenden Bildern der Sequenz einem zweiten Algorithmus zur Handerkennung zuzuführen. Vorzugsweise sind der erste und/oder zweite Algorithmus dabei in dem Rechner eingerichtet. Mit anderen Worten ist der Rechner insbesondere eingerichtet, beispielsweise programmiert, den ersten und/oder zweiten Algorithmus zur Augenerkennung beziehungsweise Handerkennung auszuführen. Der erste Algorithmus ist dabei eingerichtet, abhängig von der ersten Teilsequenz zu erkennen, ob die Bilder der ersten Teilsequenz ein Bild eines Auges umfassen. Der zweite Algorithmus ist eingerichtet, abhängig von der zweiten Teilsequenz zu erkennen, ob die Bilder der zweiten Teilsequenz ein Bild einer Hand umfassen.

Unter einer Erkennung von Augen oder Händen, insbesondere durch den ersten beziehungsweise zweiten Algorithmus, ist insbesondere eine Identifizierung eines oder mehrere Augen als solche beziehungsweise einer oder mehrerer Hände als solche in den von der Kamera des Systems aufgenommen Bildern zu verstehen. Die Erkennung kann dabei vorzugsweise eine Erkennung einer durch das erkannte Auge beziehungsweise der erkannten Hand ausgeführte Bewegung als Geste umfassen. Beispielsweise kann es sich bei dem ersten Algorithmus zur Augenerkennung um einen Bilderkennungsalgorithmus basierend auf dem oben genannten Dokument von A. Päsäricä et al. oder einem Algorithmus von Smart Eye AB handeln und bei dem zweiten Algorithmus zur Handerkennung um einen Bilderkennungsalgorithmus basierend auf dem oben genannten Dokument von F. Weichert et al. handeln. Beispielsweise kann die Erkennung des Auges für eine Zustandserkennung, beispielsweise eine Ermittlung der Müdigkeit oder der Blickrichtung, eines Benutzers des Systems oder für eine Steuerung des Systems über eine Position und/oder eine Bewegung des Auges, also über eine Geste des Auges, verwendet werden. Beispielsweise kann die Erkennung der Hand für eine Steuerung des Systems verwendet werden, insbesondere über eine Erkennung einer Position und/oder einer Bewegung der Hand, insbesondere also über eine Erkennung einer durch die Hand ausgeführten Geste. Insbesondere erfolgt dabei ein Vergleich der erkannten Augengeste beziehungsweise Handgeste mit in dem System abgelegten vorgegebenen Gesten.

Unter einer Sequenz von Bildern kann eine Abfolge von Bildern, insbesondere eine Abfolge von aufeinander folgenden Bilder verstanden werden. Dabei kann es sich vorzugsweise um unmittelbar aufeinander folgende Bilder handeln. Unter einer Teilsequenz ist insbesondere ein Ausschnitt aus der Sequenz zu verstehen, also eine Teilmenge von aufeinander folgenden Bildern aus der Sequenz der Bilder, vorzugsweise von unmittelbar aufeinander folgenden Bildern aus der Sequenz. Unter einen vorgebbaren Anzahl von Bildern ist zu verstehen, dass der Rechner eingerichtet ist, eine grundsätzliche fixe Anzahl der Bilder der Teilsequenzen zu ändern. Die Änderung kann dabei insbesondere in einer entsprechenden Programmierung des Rechners vorgegeben sein.

Wie oben angeführt, ist der Rechner eingerichtet, alternierend eine erste Teilsequenz dem ersten Algorithmus und eine zweite Teilsequenz dem zweiten Algorithmus zuzuführen. Die Sequenz der Bilder umfasst somit mehrere erste und zweite Teilsequenzen, wobei jeweils eine zweite Teilsequenz auf eine erste Teilsequenz folgt. Abhängig von der Gesamtzahl der durch die Kamera aufgenommenen Bilder kann dabei die letzte erste oder die letzte zweite Teilsequenz unvollständig sein. Vorzugsweise ergibt die Summe aller ersten und zweiten Teilsequenzen die gesamte Sequenz der aufgenommenen Bilder, so dass vorteilhafterweise jedes aufgenommene Bild weiterverarbeitet wird. Alternativ kann die Sequenz Bilder umfassen, welche nicht Teil der ersten oder zweiten Teilsequenz sind, beispielsweise ein oder mehrere Bilder zwischen den Teilsequenzen. Unter der alternierenden Zuführung durch den Rechner ist somit eine abwechselnde, exklusive Zuführung zum ersten und zweiten Algorithmus zu verstehen. Ferner kann unter der Zuführung zum ersten und zweiten Algorithmus verstanden werden, dass der Rechner ausgebildet ist, insbesondere programmiert ist, abwechselnd den ersten und den zweiten Algorithmus auszuführen.

Das erfindungsgemäße System, welches gemäß dem erfindungsgemäßen Verfahren eingerichtet ist, hat den Vorteil, dass für eine gemeinsame Augen- und Handerkennung nur eine Kamera und nur ein damit verbundener und erfindungsgemäß eingerichteter Rechner benötigt werden. Die durch die Erfindung mögliche Aufteilung eines einzigen Bilderstroms ermöglicht es vorteilhafterweise, dass weniger Resourcen sowohl bezüglich Hardware als auch Rechenleistung für eine simultane Hand- und Augenerkennung erforderlich sind. Dies ermöglicht es ferner, neben Betriebskosten auch Herstellungs- oder Anschaffungskosten für das System einzusparen. Darüber hinaus ist trotz der Einsparung an Hardware eine verzögerungsfreie Erfassung der zeitlich stark unterschiedlichen Bewegungen von Augen und Händen vorteilhafterweise durch die Erfindung möglich.

Vorzugsweise kann das System, insbesondere der Rechner eingerichtet sein, abhängig von einem erkannten Auge oder einer erkannten Hand, insbesondere abhängig von erkannten Bewegungen und Gesten des Auges oder der Hand, eine vorgegebene Steuerung des System auszuführen, welche beispielsweise eine Bedienung des Systems über Augen oder Handbewegungen ermöglichen. Dies hat den Vorteil, dass eine Gestensteuerung des Systems sowohl über Augen als auch Hände mit nur einer Kamera und einem Rechner möglich ist.

Die erste Anzahl der Bilder wird größer als die zweite Anzahl der Bilder vorgegeben, das heißt festgelegt. Dies bewirkt, dass bezogen auf die Gesamtanzahl der aufgenommenen Bildersequenz ein größerer Anteil an Bildern dem Algorithmus zur Augenerkennung als dem Algorithmus zur Handerkennung zugeführt werden. Dies ermöglicht eine insgesamt zuverlässigere Erkennung, da für eine Augenerkennung aufgrund der geringeren Größe und meist schnelleren Bewegung eines Auges im Vergleich zu einer Hand mehr Bilder pro Zeiteinheit für eine hochwertige Erkennung benötigt werden.

Gemäß einer vorteilhaften Ausgestaltung der Erfindung ist die erste Anzahl eine Zahl zwischen 9 und 29, vorzugsweise zwischen 16 und 22, ganz bevorzugt 20 ist und die zweite Anzahl eine Zahl zwischen 1 und 5, vorzugsweise zwischen 1 und 3, ganz bevorzugt 1. Somit wird eine Verhältnis der ersten Anzahl zur zweiten Anzahl zwischen 29 zu 1 und 9 zu 5, vorzugsweise zwischen 22 zu 1 und 16 zu 3, ganz bevorzugt 20 zu 1 vorgegeben. Wie oben ausgeführt, ist all diesen Anzahlen und Verhältnissen gemein, dass für eine vorteilhafte hohe Zuverlässigkeit eine größere Zahl beziehungsweise ein größerer Anteil der den Algorithmen zugeführten Bilder der Augenerkennung zugeführt werden.

In einer besonders vorteilhaften Weiterbildung der Erfindung ist das System eingerichtet, ein Verhältnis der ersten Anzahl zur zweiten Anzahl zu ändern, wenn in einer zweiten Teilsequenz eine Hand erkannt wird. Dies kann durch eine Änderung der ersten Anzahl und/oder einer Änderung der zweiten Anzahl erfolgen. Insbesondere kann das Verhältnis verringert werden, so dass anteilsmäßig mehr Bilder dem Algorithmus zur Handerkennung zugeführt werden. Bevorzugt wird also das Verhältnis in Richtung der Zahl 1 verändert. Mit anderen Worten kann eine Differenz der ersten Anzahl zur zweiten Anzahl durch Änderung der ersten Anzahl und/oder der zweiten Anzahl verändert werden, insbesondere verringert. Dies hat den Vorteil, dass bei Abwesenheit einer Handerkennung die aufgenommenen Bilder hauptsächlich zur Augenerkennung verwendet werden können und erst bei einer Handerkennung eine gleichmäßigere Aufteilung der Bilder erfolgt. Vorteilhafterweise wird somit ein größerer Anteil der aufgenommenen Bilder während der Handerkennung dem zweiten Algorithmus für eine zuverlässige und zeitlich hochaufgelöste Handerkennung zugeführt. Ferner wird vorteilhafterweise die Ressourcenaufteilung des Systems verbessert. Insbesondere können bei einer Nichterkennung der Hand nicht benötigten Ressourcen, insbesondere des Rechners, für die Augenerkennung genutzt werden.

In einer vorteilhaften Ausgestaltung ist das System eingerichtet, die erste Anzahl für eine folgende, insbesondere für die nächste und/oder übernächste, erste Teilsequenz auf eine Zahl zwischen 2 und 10, vorzugsweise zwischen 3 und 7, ganz bevorzugt auf 5 vorzugeben, wenn in einer zweiten Teilsequenz eine Hand erkannt wird. Alternativ oder zusätzlich kann das System eingerichtet sein, die zweite Anzahl für die nächste und/oder übernächste zweite Teilsequenz auf eine Zahl zwischen 1 und 5, vorzugsweise zwischen 3 und 5, ganz bevorzugt auf 5 vorzugeben, wenn in einer zweiten Teilsequenz eine Hand erkannt wird. Wenn eine schnelle Umschaltung der Zuweisung der Bilder durch das System gewünscht wird, kann bereits in der nächsten ersten beziehungsweise zweiten Teilsequenz die oben angeführte Änderung der ersten beziehungsweise zweiten Anzahl nach Erkennung der Hand in der unmittelbaren vorhergehenden zweiten Teilsequenz erfolgen. Bei nicht ganz so hohen Anforderungen an das System kann alternativ auch eine Änderung erst bei der übernächsten Teilsequenz erfolgen.

Vorzugsweise handelt es sich bei der Kamera des Systems um eine Infratrotkamera. Dies ermöglicht es vorteilhafterweise, ein den Benutzer nicht störendes Infrarotlicht zur Ausleuchtung des Benutzers zu verwenden. Insbesondere kann das System auch eine Infrarotlichtquelle zur Ausleuchtung des Benutzers umfassen, insbesondere zur Ausleuchtung der Augen und/oder einer Hand des Benutzers, wobei das von der Infrarotlichtquelle emittierbare Licht vorzugsweise Wellenlängen um 920 Nanometer umfasst. Bei der Kamer kann es sich beispielsweise um eine Kamera handeln, welche ausgebildet ist, mindestens 60 Bilder pro Sekunde aufzunehmen. Angesichts der oben vorgeschlagenen Aufteilung der Bilder für die beiden Algorithmen, unterstützt eine solche Aufnahmerate eine zuverlässige Augen- beziehungsweise Handerkennung.

Gemäß einer weiteren Ausgestaltung der Erfindung umfasst das System eine zweite Kamera zur Erfassung der Augen des Benutzers, wobei die zweite Kamera vorzugsweise in einem vor dem Benutzer anzuordnenden Teil des Systems angeordnet ist. Dies hat den Vorteil, dass der Bereich für die Erfassung der Augen vergrößert und die Anzahl der aufnehmbaren Bilder pro Zeiteinheit erhöht werden könnnen, was zu einer noch zuverlässigeren Augenerkennung führt. Die zweite Kamera kann dabei mit dem Rechner des System für die Unstützung der Augenerkennung oder mit einem weiteren Rechner verbunden sein, beispielsweise für eine Erkennung des zweiten Auges des Benutzers.

Die Erfindung betrifft auch eine Konsole für ein Kraftfahrzeug, insbesondere eine Mittelkonsole, mit einem erfindungsgemäßen System. Das System, insbesondere der Rechner, ist dabei eingerichtet, abhängig von einer Position und/oder Bewegung einer erkannten Hand eine Geste zur Steuerung des Systems zu erkennen und die Steuerung auszuführen. Ferner kann das System, insbesondere der Rechner, eingerichtet sein, abhängig von einer Position und/oder Bewegung eines erkannten Auges eine Geste zur Steuerung des Systems zu erkennen und die Steuerung auszuführen. Alternativ oder zusätzlich kann das System, insbesondere der Rechner, eingerichtet sein, über die Augenerkennung eine Zustandserkennung, beispielsweise eine Blickrichtungserkennung oder eine Müdigkeitsbestimmung, des Benutzers oder Fahrers durchzuführen und vorzugsweise abhängig von dem erkannten Zustand das System anzusteuern und/oder dem Benutzer oder Fahrer eine Rückmeldung zu geben, beispielsweise über ein Display des Systems.

Die Erfindung betrifft ferner ein Kraftfahrzeug mit einer erfindungsgemäßen Konsole. Ein Einsatz der Erfindung in einem Kraftfahrzeug ist besonders vorteilhaft, da der Einsatz nur einer Kamera mit zugehörigem Rechner gemäß der Erfindung den Erfordernissen eines beschränkten Bauraums im Kraftfahrzeug genügt. Ferner kann das erfindungsgemäße System den Fahrer vorteilhafterweise bei einem sicheren Betrieb des Kraftfahrzeugs unterstützen, da eine Steuerung des Systems aufgrund der Augen oder Handerkennung keine Ablenkung des Fahrers vom Verkehrsgeschehen erfordert.

Wie oben angeführt, betrifft die Erfindung auch ein Verfahren zur Erkennung von Augen und Händen in einer durch eine Kamera aufgenommenen Sequenz von Bildern, wobei in einem mit der Kamera verbundenen Rechner alternierend eine erste Teilsequenz umfassend eine vorgebbare erste Anzahl von aufeinander folgenden Bildern einem, insbesondere in dem Rechner eingerichteten, ersten Algorithmus zur Augenerkennung und eine zweite Teilsequenz umfassend eine vorgebbare zweite Anzahl von aufeinander folgenden Bildern einem, insbesondere in dem Rechner eingerichteten, zweiten Algorithmus zur Handerkennung zugeführt wird, wobei der erste Algorithmus abhängig von der ersten Teilsequenz erkennt, ob die Bilder der ersten Teilsequenz ein Bild eines Auges umfassen und wobei der zweite Algorithmus abhängig von der zweiten Teilsequenz erkennt, ob die Bilder der zweiten Teilsequenz ein Bild einer Hand umfassen. Die erste Anzahl wird größer als die zweite Anzahl vorgegeben.

Zu den Vorteilen des erfindungsgemäßen Verfahrens und den folgenden vorteilhaften Weiterbildungen und Ausgestaltungen wird auf die oben ausgeführten korrespondierenden Weiterbildungen und Ausgestaltungen des erfindungsgemäßen Systems verwiesen.

Gemäß einer besonders vorteilhaften Weiterbildung handelt es sich bei dem Verfahren um ein Verfahren zur Erkennung von durch Augen oder Hände ausgeführte Gesten, wobei äbhängig von der erkannten Geste das erfindungsgemäße Systems angesteuert wird. Insbesondere kann in Abhängigkeit von der erkannten Geste eine Funktionalität des Systems angesteuert werden. Beispielsweise kann äbhängig von den erkannten Gesten eine Funktionalität eines Kraftfahrzeugs angesteuert werden.

In einer vorteilhaften Ausgestaltung des Verfahrens wird für die erste Anzahl eine Zahl zwischen 9 und 29, vorzugsweise zwischen 16 und 22, ganz bevorzugt 20 und für die zweite Anzahl eine Zahl zwischen 1 und 5, vorzugsweise zwischen 1 und 3, ganz bevorzugt 1 vorgegeben.

Gemäß einer besonders vorteilhaften Ausgestaltung des Verfahrens wird, wenn in einer zweiten Teilsequenz eine Hand erkannt wird, ein Verhältnis der ersten Anzahl zur zweiten Anzahl geändert, wenn in einer zweiten Teilsequenz eine Hand erkannt wird. Dies kann durch eine Änderung der ersten Anzahl und/oder einer Änderung der zweiten Anzahl erfolgen. Insbesondere kann das Verhältnis verringert werden. Bevorzugt wird also das Verhältnis in Richtung der Zahl 1 verändert. Insbesondere wird die erste Anzahl für eine darauf folgende, insbesondere für die nächste und/oder übernächste, erste Teilsequenz auf eine Zahl zwischen 2 und 10, vorzugsweise zwischen 3 und 7, ganz bevorzugt auf 5 vorgegeben. Bevorzugt wird alternativ oder zusätzlich, wenn in einer zweiten Teilsequenz eine Hand erkannt wird, die zweite Anzahl für eine darauf folgende, insbesondere für die nächste und/oder übernächste, zweite Teilsequenz auf eine Zahl zwischen 1 und 5, vorzugsweise zwischen 3 und 5, ganz bevorzugt auf 5 vorgegeben.

Die Erfindung umfasst ferner ein Computerprogramm und ein computerlesbares Speichermedium, welche jeweils Befehle umfassen, die bei der Ausführung durch einen Computer diesen veranlassen, das erfindungsgemäße Verfahren durchzuführen beziehungsweise auszuführen.

### Kurze Beschreibung der Zeichnungen

Ausführungsbeispiele der Erfindung sind in den Zeichnungen schematisch dargestellt und in der nachfolgenden Beschreibung näher erläutert.

Es zeigen
- Figur 1: ein Ausführungsbeispiel des erfindungsgemäßen Systemps sowie
- Figuren 2 und 3: Ablaufdiagramme zu einem Ausführungsbeispiel des erfindungsgemäßeb Verfahrens.

### Ausführungsformen der Erfindung

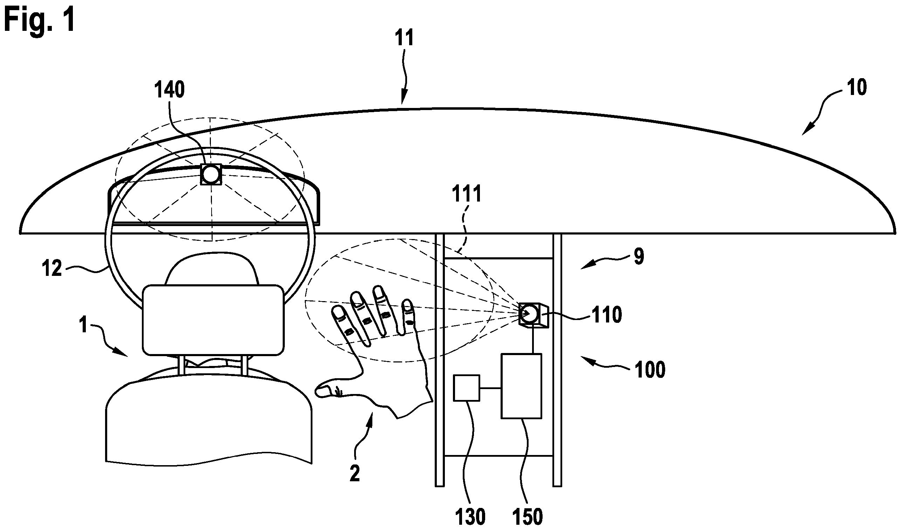

Figur 1 zeigt ein Ausführungsbeispiel des erfindungsgemäßen Systems 100 zur Erkennung von Augen und Händen eines Benutzers. Das System 100 ist in diesem Beispiel als Teil eines Ausführungsbeispiels einer Mittelkonsole 9 eines erfindungsgemäßen Kraftfahrzeugs 1 ausgeführt, so dass es sich bei Blickrichtung des Fahrers 1 zur Windschutzscheibe 11 rechts vom Fahrer 1 befindet.

Das System 100 umfasst eine Kamera 110 zur Aufnahme von Bildern in einem Erfassungsbereich 111 der Kamera 110. In diesem Beispiel handelt es sich bei der Kamera 110 um eine Infrarotkamera 110, welche derart ausgebildet und angeordnet ist, dass ihr Erfassungsbereich 111 eine Bewegung der rechten Hand 2 des Fahrers 1 in einem Bereich zwischen dem Fahrer 1 und dem Lenkrad 12 des Fahrzeugs 10 umfasst. Beispielsweise kann es sich dabei um SmartEye Multi Blackbird ^{®} Kamera handeln. Außerdem kann das System 100 eine Lichtquelle 130 zur Ausleuchtung des Fahrers umfassen, welche von dem Rechner 150 angesteuert werden kann. In diesem Beispiel handelt es sich bei der Lichtquelle 130 um eine Infrarotlichtquelle 130, welche derart ausgebildet und angeordnet ist, dass sie zumindest einen Teil des Erfassungsbereichs 111 der Kamera 110 ausleuchten kann. Beispielsweise kann die Infrarotlichtquelle 130 ausgebildet sein, Infratrotlicht mit Wellenlängen um 920 Nanometer auszusenden. Beispielsweise kann es sich bei der Infrarotlichtquelle 130 um einen 920-Nanometer-Illuminator oder um eine in Schimmel M. et AI., "Distances between facial landmarks can be measured accurately with a new digital 3-dimensional video system", (Februar 2016, http://smarteye.se/wpcontent/uploads/2015/01/Schimmel-et-al..pdf) genannte Lichtquelle handeln,

Das System 100 umfasst ferner einen Rechner 150, welcher mit der Kamera 110 verbunden und eingerichtet ist, eine von der Kamera 110 aufgenommene Sequenz von Bildern zu verarbeiten. Der Rechner 150 kann dazu beispielsweise einen Mikroprozessor und einen damit verbundenen Speicher aufweisen, beispielweise ein In-Car PC von Pokini ^{®} oder Intel ^{®} NUC mit einem Multi-Core-Prozessor und einem Arbeitsspeicher von 2 Gigabyte oder mehr. Gemäß diesem Ausführungsbeispiel sind im Rechner 150, insbesondere im Speicher des Rechners 150, ein erster Algorithmus zur Augenerkennung und ein zweiter Algorithmus zur Handerkennung abgelegt. Beispielsweise kann es sich bei dem ersten Algorithmus zur Augenerkennung um einen oben genannten Bilderkennungsalgorithmus (Smart Eye) handeln und bei dem zweiten Algorithmus zur Handerkennung um einen oben genannten Bilderkennungsalgorithmus (leap motion) handeln. Der Rechner 150, insbesondere der Mikroprozessor des Rechners 150, ist ausgebildet, Bilder der Sequenz den beiden Algorithmen für eine Verarbeitung mit den Algorithmen zuzuführen. In diesem Beispiel ist das System 100 ausgebildet, abhängig von einem erkannten Auge oder einer erkannten Hand, insbesondere abhängig von erkannten Positionen, Bewegungen und Gesten der Augen oder Hände, eine vorgegebene Steuerung des Systems 100 auszuführen, beispielsweise eine Steuerung von Funktionalitäten des Kraftfahrzeugs 10 wie zum Beispiel eine Steuerung einer Klimaanlage, eines Navigationssystems, eines Unterhaltungssystems und/oder zum Erzeugen eines haptischen Feedbacks für die Hand.

Der Rechner 150 ist eingerichtet, alternierend eine erste Teilsequenz umfassend eine vorgebbare erste Anzahl von aufeinander folgenden Bildern dem ersten Algorithmus zur Augenerkennung und eine zweite Teilsequenz umfassend eine vorgebbare zweite Anzahl von aufeinander folgenden Bildern dem zweiten Algorithmus zur Handerkennung zuzuführen, wobei der erste Algorithmus abhängig von der ersten Teilsequenz erkennt, ob die Bilder der ersten Teilsequenz ein Bild eines Auges umfassen und wobei der zweite Algorithmus abhängig von der zweiten Teilsequenz erkennt, ob die Bilder der zweiten Teilsequenz ein Bild einer Hand umfassen. Beispielsweise wird als erste Anzahl eine Zahl zwischen 9 und 29, in diesem Beispiel 20, und als zweite Anzahl eine Zahl zwischen 1 und 5, in diesem Beispiel 1, vorgegeben. Ferner werden in diesem Beispiel alle von der Kamera 150 aufgenommenen Bilder einem der beiden Algorithmen zugeführt. Somit wird gemäß diesem Beispiel eine erste Teilsequenz von 20 unmittelbar aufeinander folgenden Bildern dem ersten Algorithmus zur Augenerkennung zugeführt, gefolgt von einer Zuführung einer zweiten Teilsequenz mit nur einem Bild zum zweiten Algorithmus zur Handerkennung, wiederum gefolgt von einer Zuführung einer weiteren ersten Teilsequenz mit 20 Bildern zum ersten Algorithmus und so fort. Diese alternierende Zuführung der Bilder zu den beiden Algorithmen wird durchgeführt, bis durch den zweiten Algorithmus eine Hand 2 in einem Bild einer zweiten Teilsequenz erkannt wird. Das System 100, insbesondere der Rechner 150, ist eingerichtet, das Verhältnis der ersten Anzahl zur zweiten Anzahl zu ändern, in diesem Beispiel zu verringern, wenn in einer zweiten Teilsequenz eine Hand erkannt wird. Gemäß diesem Ausführungsbeispiel wird die erste Anzahl in der nächsten ersten Teilsequenz auf 5 vorgegeben. Dies bedeutet dass, solange eine Hand in den zweiten Teilsequenzen erkannt wird, nur jeweils 5 Bilder an den ersten Algorithmus zur Augenerkennung gefolgt von jeweils 1 Bild an den zweiten Algorithmus zur Handerkennung zugeführt werden, so dass ein größerer Anteil der aufgenommenen Bilder während der Handerkennung dem zweiten Algorithmus für eine zuverlässige und zeitlich hochaufgelöste Erkennung zugeführt werden. Wenn keine Hand mehr in der zweiten Teilsequenz detektiert wird, wird die erste Anzahl wieder auf 20 gesetzt. Wie oben ausgeführt, können auch anderen Zahlen für die erste und/oder zweite Anzahl vorgegeben werden.

Das System 100 kann eine zweite Kamera 140 zur Erfassung der Augen des Fahrers 1 umfassen, wobei die zweite Kamera 140 vorzugsweise in einem vor dem Fahrer 1 anzuordnenden Teil des Systems 100 angeordnet ist. Wie in Figur 1 gezeigt, kann die zweite Kamera 140 insbesondere im Bereich des Kombi-Instruments oder am Lenkrad 12 des Fahrzeugs 10 angeordnet sein. Wie bei der ersten Kamera 110 handelt es sich bei der zweiten Kamera 140 vorzugsweise um eine Infratrotkamera.

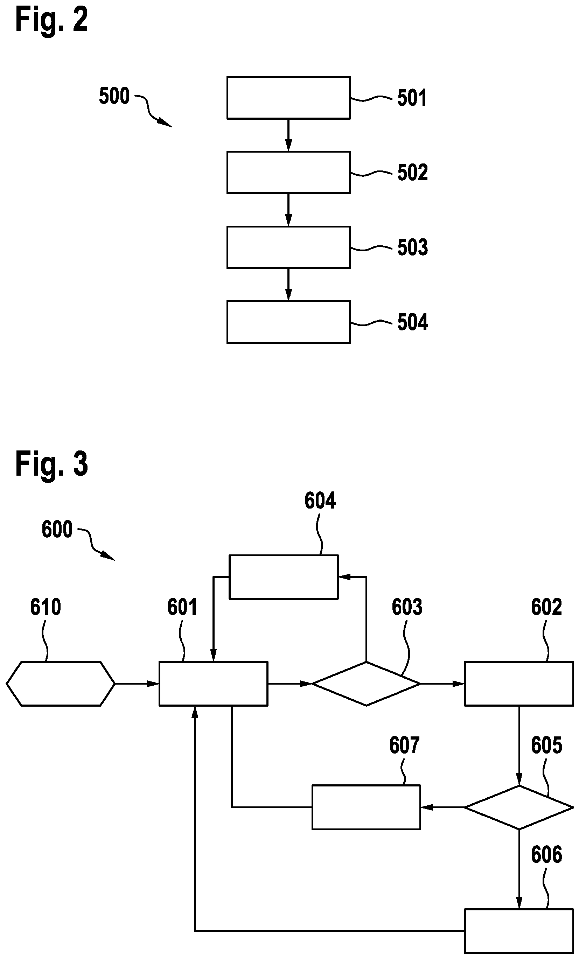

Figur 2 zeigt ein Ablaufdiagramm zu einem Ausführungsbeispiel des erfindungsgemäßen Verfahren 500, welches beispielsweise über das System 100 des Ausführungsbeispiels gemäß Figur 1 ablaufen kann.

In einem ersten Schritt 501 des Verfahrens 500 nimmt die Kamera 110 des Systems 100 eine Sequenz von Bildern auf, welche an den Rechner 150 des Systems weitergeleitet wird. In einem zweiten Schritt führt der Rechner 150 alternierend eine erste Teilsequenz umfassend eine vorgebbare erste Anzahl von aufeinander folgenden Bildern aus der Sequenz einem, insbesondere in dem Rechner eingerichteten, ersten Algorithmus zur Augenerkennung und eine zweite Teilsequenz umfassend eine vorgebbare zweite Anzahl von aufeinander folgenden Bildern aus der Sequenz einem, insbesondere in dem Rechner eingerichteten, zweiten Algorithmus zur Handerkennung zu. In einem, insbesondere zeitlich mit dem zweiten Schritt 502 überlappenden, dritten Schritt 503 wird abhängig von der ersten Teilsequenz durch den ersten Algorithmus erkannt, ob die Bilder der ersten Teilsequenz ein Bild eines Auges umfassen, und wird abhängig von der zweiten Teilsequenz durch den zweiten Algorithmus erkannt, ob die Bilder der zweiten Teilsequenz ein Bild einer Hand umfassen. In einem vierten Schritt 504 wird das System 100 vorzugsweise abhängig von dem erkannten Auge oder der erkannten Hand angesteuert, insbesondere abhängig von einer durch das Auge beziehungsweise durch die Hand ausgeführten erkannten Geste.

Figur 3 zeigt ein Ablaufdiagramm 600 zu einem Ausführungsbeispiel einer vorteilhaften Ausgestaltung des Verfahrens, beispielsweise als Ausgestaltung des Verfahrens 500 zum Ausführungsbeispiel gemäß der Figuren 1 und 2.

In diesem Ausführungsbeispiel wird zunächst ein Zähler 610 auf die vorgegebene erste Anzahl für die erste Teilsequenzen gesetzt, beispielsweise auf die Zahl 20. Dann wird ein Bild aus der durch die Kamera 110 aufgenommenen Sequenz der Bilder dem ersten Algorithmus 601 zur Augenerkennung zugeführt. Mit anderen Worten wird der erste Algorithmus 601 zur Augenerkennung in dem Rechner 150 auf das Bild angewandt. Anschließend wird in einem ersten Vergleich 603 bestimmt, ob der Zähler 610 noch größer als 0 ist. Wenn ja, wird der Zähler 610 um 1 reduziert, also in diesem Beispiel auf 19 gesetzt (604), und das nächste Bild aus der Sequenz dem ersten Algorithmus 601 zugeführt (601). Anschließend wird erneut der Zähler 610 auf eine Zahl größer als 0 abgefragt (603) und wenn dies der Fall ist, um 1 reduziert (604), also in diesem Beispiel nun auf 18 gesetzt, und das nächste Bild aus der Sequenz dem ersten Algorithmus 601 zugeführt (601). Diese Schleife wird so lange durchgeführt, bis der erste Vergleich 603 negativ ausfällt, der Zähler 610 also 0 beträgt. Wenn dies der Fall ist, wird das nächste Bild aus der Sequenz dem zweiten Algorithmus 602 zur Handerkennung zugeführt. Mit anderen Worten wird der zweite Algorithmus 602 zur Handerkennung in dem Rechner 150 auf das Bild angewandt. Dieses Bild stellt nun die oben genannte zweite Teilsequenz dar. Die vorgegebene zweite Anzahl beträgt in diesem Beispiel also 1. Wird in diesem Bild keine Hand durch den zweiten Algorithmus 602 erkannt, so wird der Zähler 610 wieder auf die vorgegebene erste Anzahl gesetzt (606), also in diesem Beispiel auf 20, und das nächste Bild aus der Sequenz wird wieder dem ersten Algorithmus 601 zur Handerkennung zugeführt. Wenn jedoch in dem Bild aus der zweiten Teilsequenz eine Hand durch den zweiten Algorithmus 602 erkannt wurde, wird die vorgegebene erste Anzahl in vorgegebener Weise abgeändert (607), beispielsweise auf 5, und der Zähler 610 wird auf die geänderte vorgegebene erste Anzahl gesetzt. In diesem Fall wird somit nur die geänderte erste Anzahl an Bildern aus der Sequenz dem ersten Algorithmus 601 zugeführt, bevor ein darauf folgendes Bild aus der Sequenz wieder dem zweiten Algorithmus 602 zugeführt wird. Wenn in dem letztgenannte Bild wieder eine Hand erkannt wird (602), wird der Zähler erneut auf die geänderte vorgegebene erste Anzahl, hier 5, gesetzt (605, 607). Wenn keine Hand erkannt wird (602), wird der Zähler auf die ursprüngliche vorgegebene erste Anzahl gesetzt, also hier wieder auf 20.

## Patentansprüche

1. System (100), insbesondere für ein Kraftfahrzeug (10), zur Erkennung von Augen und Händen in einer mit einer Kamera (110) des Systems (100) aufgenommenen Sequenz von Bildern, wobei das System (100) einen Rechner (150) umfasst, welcher eingerichtet ist, eine erste Teilsequenz umfassend eine erste Anzahl von aufeinander folgenden Bildern einem, insbesondere in dem Rechner (150) eingerichteten, ersten Algorithmus zur Augenerkennung und eine zweite Teilsequenz umfassend eine zweite Anzahl von aufeinander folgenden Bildern einem, insbesondere in dem Rechner (150) eingerichteten, zweiten Algorithmus zur Handerkennung abwechselnd und exklusiv zuzuführen, wobei der erste Algorithmus abhängig von der ersten Teilsequenz erkennt, ob die Bilder der ersten Teilsequenz ein Bild eines Auges umfassen und wobei der zweite Algorithmus abhängig von der zweiten Teilsequenz erkennt, ob die Bilder der zweiten Teilsequenz ein Bild einer Hand umfassen, **dadurch gekennzeichnet, dass** die erste Anzahl und die zweite Anzahl vorgebbar sind und dass die erste Anzahl größer als die zweite Anzahl vorgegeben wird.

2. System (100) nach Anspruch 1, wobei das System (100), insbesondere der Rechner (150), eingerichtet ist, abhängig von einem erkannten Auge oder einer erkannten Hand, insbesondere abhängig von erkannten Positionen und/oder Bewegungen, insbesondere Gesten des Auges oder der Hand, eine vorgegebene Steuerung des Systems (100) auszuführen.

3. System (100) nach Anspruch 1 oder 2, wobei für die erste Anzahl eine Zahl zwischen 9 und 29, vorzugsweise zwischen 16 und 22, ganz bevorzugt 20 ist und wobei für die zweite Anzahl eine Zahl zwischen 1 und 5, vorzugsweise zwischen 1 und 3, ganz bevorzugt 1 vorgegeben wird.

4. System (100) nach einem der Ansprüche 1 bis 3, wobei das System (100) eingerichtet ist, ein Verhältnis der ersten Anzahl zur zweiten Anzahl zu ändern, insbesondere zu verringern, wenn in einer zweiten Teilsequenz eine Hand erkannt wird.

5. System (100) nach einem der Ansprüche 1 bis 4, wobei das System (100) eingerichtet ist, die erste Anzahl für eine folgende, insbesondere für die nächste und/oder übernächste, erste Teilsequenz auf eine Zahl zwischen 2 und 10, vorzugsweise zwischen 3 und 7, ganz bevorzugt auf 5 vorzugeben, wenn in einer zweiten Teilsequenz eine Hand erkannt wird.

6. System (100) nach einem der Ansprüche 1 bis 5, wobei das System (100) eingerichtet ist, die zweite Anzahl für eine folgende, insbesondere für die nächste und/oder übernächste, zweite Teilsequenz auf eine Zahl zwischen 1 und 5, vorzugsweise zwischen 3 und 5, ganz bevorzugt auf 5 vorzugeben, wenn in einer zweiten Teilsequenz eine Hand erkannt wird.

7. Konsole (9), insbesondere Mittelkonsole, für ein Kraftfahrzeug (10) die Konsole (9) umfassend ein System (100) nach einem der Ansprüche 1 bis 6, wobei das System (100), insbesondere der Rechner (150), eingerichtet ist, abhängig von einer Bewegung einer erkannten Hand eine Geste zur Steuerung des Systems (100) zu erkennen und die Steuerung auszuführen.

8. Konsole (9) nach Anspruch 7, wobei die Kamera (110) des Systems (100) in einer neben einem Fahrer (1) anzuordnenden Teil der Konsole (9) angeordnet ist.

9. Verfahren (500, 600) zur Erkennung von Augen und Händen in einer durch eine Kamera (110) aufgenommenen Sequenz von Bildern, wobei in einem mit der Kamera (110) verbundenen Rechner (150) eine erste Teilsequenz umfassend eine erste Anzahl von aufeinander folgenden Bildern einem, insbesondere in dem Rechner (150) eingerichteten, ersten Algorithmus zur Augenerkennung und eine zweite Teilsequenz umfassend eine zweite Anzahl von aufeinander folgenden Bildern einem, insbesondere in dem Rechner (150) eingerichteten, zweiten Algorithmus zur Handerkennung abwechselnd und exklusiv zugeführt wird, wobei der erste Algorithmus abhängig von der ersten Teilsequenz erkennt, ob die Bilder der ersten Teilsequenz ein Bild eines Auges umfassen und wobei der zweite Algorithmus abhängig von der zweiten Teilsequenz erkennt, ob die Bilder der zweiten Teilsequenz ein Bild einer Hand umfassen, **dadurch gekennzeichnet, dass** die erste Anzahl und die zweite Anzahl vorgebbar sind und dass die erste Anzahl größer als die zweite Anzahl vorgegeben wird.

10. Verfahren (500, 600) nach Anspruch 9, wobei die Erkennung der Hand oder des Auges für eine Erkennung einer durch die Hand beziehungsweise des Auges ausgeführten Geste verwendet wird.

11. Verfahren (500, 600) nach Anspruch 10, für ein Kraftfahrzeug (10), wobei äbhängig von der erkannten Geste eine Funktionalität des Kraftfahrzeugs angesteuert wird.

12. Verfahren (500, 600) nach Anspruch 10, wobei abhängig von der Erkennung der Augen eine Zustandserkennung eines Benutzers (1) durchgeführt wird.

13. Computerprogramm, umfassend Befehle, die bei der Ausführung des Programms durch einen Computer diesen veranlassen, das Verfahren (500, 600) nach einem der Ansprüche 9 bis 12 durchzuführen.

14. Computerlesbares Speichermedium, umfassend Befehle, die bei der Ausführung durch einen Computer diesen veranlassen, das Verfahren (500, 600) nach einem der Ansprüche 9 bis 12 auszuführen.

## Claims

1. System (100), in particular for a motor vehicle (10), for detecting eyes and hands in a sequence of images recorded with a camera (110) of the system (100), wherein the system (100) comprises a computer (150), which is set up to feed, in alternation and exclusively, a first partial sequence comprising a first number of successive images to a first algorithm for eye detection, which is set up in particular in the computer (150), and a second partial sequence comprising a second number of successive images to a second algorithm for hand detection, which is set up in particular in the computer (150), wherein the first algorithm detects depending on the first partial sequence whether the images of the first partial sequence comprise an image of an eye and wherein the second algorithm detects depending on the second partial sequence whether the images of the second partial sequence comprise an image of a hand, **characterized in that** the first number and the second number are specifiable and **in that** the first number is specified to be greater than the second number.

2. System (100) according to Claim 1, wherein the system (100), in particular the computer (150), is set up to control the system (100) as specified depending on a detected eye or a detected hand, in particular depending on detected positions and/or movements, in particular gestures of the eye or the hand.

3. System (100) according to Claim 1 or 2, wherein a number between 9 and 29, preferably between 16 and 22, with particular preference 20, is specified for the first number and wherein a number between 1 and 5, preferably between 1 and 3, with particular preference 1, is specified for the second number.

4. System (100) according to one of Claims 1 to 3, wherein the system (100) is set up to change a ratio of the first number to the second number, in particular to reduce it, if a hand is detected in a second partial sequence.

5. System (100) according to one of Claims 1 to 4, wherein the system (100) is set up to specify the first number for a subsequent, in particular for the next and/or next-but-one, first partial sequence as a number between 2 and 10, preferably between 3 and 7, with particular preference 5, if a hand is detected in a second partial sequence.

6. System (100) according to one of Claims 1 to 5, wherein the system (100) is set up to specify the second number for a subsequent, in particular for the next and/or next-but-one, second partial sequence as a number between 1 and 5, preferably between 3 and 5, with particular preference 5, if a hand is detected in a second partial sequence.

7. Console (9), in particular centre console, for a motor vehicle (10), with the console (9) comprising a system (100) according to one of Claims 1 to 6, wherein the system (100), in particular the computer (150), is set up to detect a gesture for controlling the system (100) depending on a movement of a detected hand and to carry out the control action.

8. Console (9) according to Claim 7, wherein the camera (110) of the system (100) is arranged in a part of the console (9) that is to be arranged next to a driver (1).

9. Method (500, 600) for detecting eyes and hands in a sequence of images recorded using a camera (110), wherein, in a computer (150) connected to the camera (110), a first partial sequence comprising a first number of successive images is fed to a first algorithm for eye detection, which is set up in particular in the computer (150), and a second partial sequence comprising a second number of successive images is fed to a second algorithm for hand detection, which is set up in particular in the computer (150), with these feeding operations taking place in an alternating and in each case exclusive manner, wherein the first algorithm detects depending on the first partial sequence whether the images of the first partial sequence comprise an image of an eye and wherein the second algorithm detects depending on the second partial sequence whether the images of the second partial sequence comprise an image of a hand, **characterized in that** the first number and the second number are specifiable and **in that** the first number is specified to be greater than the second number.

10. Method (500, 600) according to Claim 9, wherein the detection of the hand or of the eye is used for a detection of a gesture performed by the hand or by the eye.

11. Method (500, 600) according to Claim 10, for a motor vehicle (10), wherein a functionality of the motor vehicle is controlled depending on the detected gesture.

12. Method (500, 600) according to Claim 10, wherein a status of a user (1) is detected depending on the detection of the eyes.

13. Computer program comprising commands that, when the program is executed by a computer, cause the latter to carry out the method (500, 600) according to one of Claims 9 to 12.

14. Computer-readable storage medium comprising commands that, when executed by a computer, cause the latter to carry out the method (500, 600) according to one of Claims 9 to 12.

## Revendications

1. Système (100), en particulier pour un véhicule automobile (10), permettant de reconnaître les yeux et les mains dans une séquence d'images enregistrée par une caméra (110) du système (100), le système (100) comprenant un ordinateur (150) qui est configuré pour fournir en alternance et en exclusivité
une première séquence partielle comprenant un premier nombre d'images consécutives à un premier algorithme de reconnaissance des yeux, en particulier configuré sur l'ordinateur (150), et une deuxième séquence partielle comprenant un deuxième nombre d'images consécutives à un deuxième algorithme de reconnaissance des mains, en particulier configuré sur l'ordinateur (150), le premier algorithme reconnaissant en fonction de la première séquence partielle si les images de la première séquence partielle comprennent une image d'un œil, et le deuxième algorithme reconnaissant en fonction de la deuxième séquence partielle si les images de la deuxième séquence partielle comprennent une image d'une main,
**caractérisé en ce que** le premier nombre et le deuxième nombre peuvent être spécifiés, et **en ce que** le premier nombre est spécifié pour être supérieur au deuxième nombre.

2. Système (100) selon la revendication 1, dans lequel le système (100), en particulier l'ordinateur (150), est configuré pour effectuer une commande spécifiée du système (100) en fonction d'un œil reconnu ou d'une main reconnue, en particulier en fonction de positions et/ou de mouvements reconnus, en particulier de gestes de l'œil ou de la main.

3. Système (100) selon la revendication 1 ou 2, dans lequel pour le premier nombre, un nombre entre 9 et 29, de préférence entre 16 et 22, de manière tout particulièrement préférée égal à 20 est spécifié, et dans lequel pour le deuxième nombre un nombre entre 1 et 5, de préférence entre 1 et 3, de manière tout particulièrement préférée égal à 1 est spécifié.

4. Système (100) selon l'une quelconque des revendications 1 à 3, dans lequel le système (100) est configuré pour modifier un rapport entre le premier nombre et le deuxième nombre, en particulier pour le réduire si une main est reconnue dans une deuxième séquence partielle.

5. Système (100) selon l'une quelconque des revendications 1 à 4, dans lequel le système (100) est configuré pour spécifier le premier nombre pour une première séquence partielle suivante, en particulier pour la prochaine et/ou la suivante, à un nombre entre 2 et 10, de préférence entre 3 et 7, de manière tout particulièrement préférée égal à 5 si une main est reconnue dans une deuxième séquence partielle.

6. Système (100) selon l'une quelconque des revendications 1 à 5, dans lequel le système (100) est configuré pour spécifier le deuxième nombre pour une deuxième séquence partielle suivante, en particulier pour la prochaine et/ou la suivante, à un nombre entre 1 et 5, de préférence entre 3 et 5, de manière tout particulièrement préférée égal à 5 si une main est reconnue dans une deuxième séquence partielle.

7. Console (9), en particulier console centrale, pour un véhicule automobile (10), la console (9) comprenant un système (100) selon l'une quelconque des revendications 1 à 6, dans laquelle le système (100), en particulier l'ordinateur (150), est configuré pour reconnaître un geste de commande du système (100) en fonction d'un mouvement d'une main reconnue et pour exécuter la commande.

8. Console (9) selon la revendication 7, dans laquelle la caméra (110) du système (100) est disposée dans une partie de la console (9) à attribuer à un conducteur (1).

9. Procédé (500, 600) permettant de reconnaître les yeux et les mains dans une séquence d'images enregistrée par une caméra (110), dans lequel, sur un ordinateur (150) relié à la caméra (110), une première séquence partielle comprenant un premier nombre d'images consécutives est fournie à un premier algorithme de reconnaissance des yeux, en particulier configuré sur l'ordinateur (150), et une deuxième séquence partielle comprenant un deuxième nombre d'images consécutives est fournie à un deuxième algorithme de reconnaissance des mains, en particulier configuré sur l'ordinateur (150), en alternance et en exclusivité, le premier algorithme reconnaissant en fonction de la première séquence partielle si les images de la première séquence partielle comprennent une image d'un œil, et le deuxième algorithme reconnaissant en fonction de la deuxième séquence partielle si les images de la deuxième séquence partielle comprennent une image d'une main,
**caractérisé en ce que** le premier nombre et le deuxième nombre peuvent être spécifiés, et **en ce que** le premier nombre est spécifié pour être supérieur au deuxième nombre.

10. Procédé (500, 600) selon la revendication 9, dans lequel la reconnaissance de la main ou de l'œil est utilisée pour une reconnaissance d'un geste effectué par la main ou l'œil respectivement.

11. Procédé (500, 600) selon la revendication 10, pour un véhicule automobile (10), dans lequel une fonctionnalité du véhicule automobile est pilotée en fonction du geste reconnu.

12. Procédé (500, 600) selon la revendication 10, dans lequel une reconnaissance d'état d'un utilisateur (1) est effectuée en fonction de la reconnaissance des yeux.

13. Programme informatique, comprenant des commandes qui lors de l'exécution du programme par un ordinateur font que celui-ci exécute le procédé (500, 600) selon l'une quelconque des revendications 9 à 12.

14. Support de stockage lisible par ordinateur, comprenant des commandes qui lors de l'exécution par un ordinateur font que celui-ci exécute le procédé (500, 600) selon l'une quelconque des revendications 9 à 12.
